(19) Europäisches Patentamt
European Patent Office
Office européen des brevets

(11) Publication number: 0 026 618 B1

(12) EUROPEAN PATENT SPECIFICATION

(45) Date of publication of patent specification: 31.07.85

(51) Int. Cl.$^4$: C 08 B 37/08, A 61 K 31/73

(21) Application number: 80303292.9

(22) Date of filing: 18.09.80

# (54) Process for the preparation of an acylation product from a mixture of chitin derivatives.

(30) Priority: 18.09.79 JP 119846/79

(43) Date of publication of application: 08.04.81 Bulletin 81/14

(45) Publication of the grant of the patent: 31.07.85 Bulletin 85/31

(84) Designated Contracting States: DE FR GB NL SE

(56) References cited:
EP-A-0 013 181
DE-C- 894 993

Macromol Chem. 178,2595-2602 (1977)

The file contains technical information submitted after the application was filed and not included in this specification

(73) Proprietor: KUREHA KAGAKU KOGYO KABUSHIKI KAISHA
9-11 Horidome-cho 1-chome Nihonbashi Chuo-ku
Tokyo (JP)

(72) Inventor: Koshugi, Junichi
No. 22 Daiichi-Kurehasoh 3-10-13 Nerima
Nerima-ku
Tokyo (JP)

(74) Representative: Myerscough, Philip Boyd et al
J.A.Kemp & Co. 14, South Square Gray's Inn
London, WC1R 5EU (GB)

EP 0 026 618 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a material having at least its surface layer formed of an acylated product of chitin derivatives, to a process for the preparation of this material and to its use.

Fiber-forming materials occurring in nature are divided broadly into collagen in higher animals, chitin in arthropods and lower animals and cellulose in higher plants. The skeletons of the living things are made by sedimentation of apatite, calcium carbonate and lignin respectively onto these polysaccharides.

Chitin is a mucopolysaccharide of poly-N-acetyl-D-glucosamine. The amount of it in nature compares favourably with the amount of cellulose. However, since chitin is a highly crystalline substance and its intermolecular bonding through the aminoacetyl group is extremely stable, it is very difficult to find an appropriate solvent to dissolve, disperse or swell the chitin satisfactorily. Accordingly, the development of chitin resources is far behind that of cellulose and other polysaccharides.

According to the recent research, films or fibers consisting of a regenerated chitin can be obtained by the acetylation of a chitosan by utilising the properties of chitosan dissolved in an aqueous dilute acid solution. For instance, Japanese Patent Publication No. 19213/73 discloses a method for obtaining a film of a regenerated chitin by making a film of chitosan followed by acetylation of the formed film in the solid phase. However, the object of the published reference is to obtain film-shaped articles consisting of the regenerated chitin. The reference only suggests the use of the regenerated chitin as an acoustic vibrator plate. Accordingly, it is still unsatisfactory from the view point of utilisation of chitin resources.

In EPC Publication No. 0013181 the present inventor's discovery that a de-N-acetylated carboxyalkyl chitin or a salt thereof can be made to react with an organic acid anhydride is disclosed. Acylation of the de-N-acetylated carboxyalkyl chitin occurs instantly. An acylated product is formed which is insoluble in water, acids, alkaline solutions and organic solvents. The reaction can be applied for making various kinds of shaped materials. These materials may be employed as a separating material, a base material on which enzymes can be immobilised, a material for dialysis or an adsorbent.

It has now been found that a material incorporating a mixture of certain chitin derivatives can exhibit more superior properties in several uses than a material formed of a single chitin derivative. Accordingly, the present invention provides a process for the preparation of a product having at least its surface layer composed of an acylated mixture of two or more chitin derivatives, which process comprises.

(i) mixing together two or more of the following six materials: (a) a de-N-acetylated chitin, (b) a de-N-acetylated carboxyalkyl chitin, (c) a de-N-acetylated hydroxyethyl chitin, (d) a de-N-acetylated hydroxypropyl chitin, (e) a de-N-acetylated dihydroxypropyl chitin and (f) a de-N-acetylated alkyl chitin, said materials being represented by the formula (1):

$$[C_6H_8O_3 \cdot (NH_2)_x \cdot (NHCOCH_3)_y \cdot (OR)_a \cdot (OH)_b]_n \qquad (1)$$

wherein R represents a carboxyalkyl group of from two to four carbon atoms, a hydroxyethyl group, a hydroxypropyl group, a dihydroxypropyl group or an alkyl group of from one to three carbon atoms, $x$ is a number of 0.1 to 1.0, $y$=1.0−$x$, $a$ is a number of 0 to 1.0, and $b$=1.0−$a$, or being salts of said compounds of formula (1); and

(ii) acylating the mixture of materials such that the desired product having at least its surface layer composed of the acylated mixture is obtained.

The product obtained by the process of the present invention has a broader permeability and a higher molecular sieve effectiveness than a material made of a single chitin derivative because the velocity of acylation of each chitin derivative in the mixture differs. The product has also a high strength and density since the viscosity of the aqueous solution of the mixture of chitin derivatives is easily adjustable. Further a porous product can easily be prepared by the salting out effect and because a suitable solvent can be selected from a wide range due to the mixture of chitin derivatives forming polyion complex.

The product prepared by the process of the invention can be produced by acylation in multiple stages. For instance, a material may be produced by partial acylation with a certain acylating agent followed by a further partial acylation with another acylating agent different from the first acylating agent. When acylation is effected in a multiplicity of stages, the partial acylation with a different acylating agent can be carried out as many times as is required until the desired acylated product is obtained.

According to this technique, by controlling the acylation reaction time and/or the amount of acylating agent, etc. in each partial acylation, a product can be obtained including two or more layers with each layer comprising an acylated product of the mixture of chitin derivatives and the acylated product of one layer being different from the acylated product of an adjacent layer.

Alternatively, acylation in multiple stages can also be effected by utilising the different acylation reaction velocities of each chitin derivative in the mixture. It is possible to carry out partial acylation in a first stage to form selectively the acylated product of the chitin derivative having the faster acylation velocity and then to effect another acylation on the chitin derivative having the slower reaction acylation velocity by using another acylating agent. The material thus obtained comprises the acylated product of the chitin derivative having the faster reaction velocity and the acylated product of the chitin derivative having the slower reaction velocity, and has a homogenous structure because the chitin derivative of the slower

reaction velocity slowly reacts within the space between the acylated product of chitin derivative of the faster reaction velocity which has been formed in earlier stage.

Furthermore, by employing techniques of acylation in multiple stages it can be possible to prepare a material containing an acylated product formed from a N-acylated substance which is easily decomposable with enzymes and an acylated substance which is treated with an acylating agent of a larger molecular weight, such as caproic anhydride, which enzymes hardly decompose. This type of material can give a highly porous material by treating it with an enzyme such as chitinase or lysozyme.

A chitin starting material for use in the invention is defined as a derivative of chitin which is soluble in water or an aqueous dilute acidic solvent such as an aqueous dilute solution of acetic acid or hydrochloric acid. The starting materials are chosen from (a) a de-N-acylated chitin, (b) a de-N-acetylated carboxyalkyl chitin, (c) a de-N-acetylated hydroxyethyl chitin, (d) a de-N-acetylated hydroxypropyl chitin, (e) a de-N-acetylated dihydroxypropyl chitin and (f) a de-N-acetylated alkyl chitin. These starting materials are collectively represented by the following formula (1):

$$[C_6H_8O_3 \cdot (NH_2)_x \cdot (NHCOCH_3)_y \cdot (OR)_a \cdot (OH)_b]_n \qquad (1)$$

wherein R represents a carboxyalkyl group with two to four carbon atoms, a hydroxyethyl group, a hydroxypropyl group, a dihydroxypropyl group or an alkyl group with one to three carbon atoms;

$x$ is a number of 0.1 to 1.0;

$y=1.0-x$;

$a$ is a number of 0 to 1.0; and

$b=1.0-a$,

or are salts of the compounds of formula (1). The salts include a salt of an alkali metal, an alkaline earth metal, ammonium, acetic acid and hydrochloric acid, etc.

The de-N-acetylated and etherified starting materials of carboxyalkyl chitin, hydroxyethyl chitin, hydroxypropyl chitin and dihydroxypropyl chitin of the above-mentioned formula have a degree of substitution, $a$, of preferably 0.1 to 1.0, more preferably 0.3 to 1.0 per pyranose ring and a degree of de-N-acetylation, $x$, of 0.1 to 1.0, preferably 0.2 to 0.6, from the view point of their solubility in aqueous solvents and the viscosity of the thus obtained solutions. For the same reasons, the de-N-acetylated and etherified starting materials of alkylchitin or methyl-, ethyl- and propylchitin of the above-mentioned formula have a degree of substitution $a$ of preferably 0.1 to 1.0, more preferably 0.3 to 1.0 and degree of de-N-acetylation, $x$, of preferably 0.5 to 1.0, more preferably 0.5 to 0.9. Further the de-N-acetylation product of chitin, in which $a$ is 0 in the above mentioned formula, has a degree of de-N-acetylation $x$ of preferably 0.5 to 1.0, more preferably 0.5 to 0.9.

In the present invention a mixture of two or more of the starting materials (a) to (f) is acylated. Preferably, (A) a de-N-acetylated chitin (a) and/or a de-N-acetylated alkyl chitin (f) of formula (1) and (B) at least one of a de-N-acetylated carboxyalkyl chitin (b), a de-N-acetylated hydroxyethyl chitin (c), a de-N-acetylated hydroxypropyl chitin (d) and a de-N-acetylated dihydroxypropyl chitin (e) of formula (1) are mixed together in step (i). In that event, preferably derivatives (A) and (B) are mixed in proportions of from 0.05 to 50 parts by weight of (B) per part by weight of (A).

If necessary, the acylated product may be cross-linked. The composition of the mixture of chitin starting materials that is, the combination and the ratio of chitin derivatives, can be selected depending on the properties of the final product in use, the viscosity of the solution of the mixture and the velocity of acylation of each chitin derivative.

The mixture of chitin derivatives may be obtained in step (i) by mixing aqueous solutions of chitin derivatives or gel-like chitin derivatives. When the mixture is obtained by mixing a solution containing an anionic chitin derivative and a solution containing a cationic chitin derivative, a polyion-complex may be formed therebetween in the course of the mixing. Such polyion-complexes are mixtures which may be acylated according to the invention.

Acylation is effected in step (ii) by bringing an aqueous solution of the mixture of chitin derivatives into contact with an anhydride of an organic acid or with a mixture of the anhydride and an organic acid. Although the acylation mechanism has not yet been elucidated, the reaction takes place at once when the aqueous solution of the mixture of chitin derivatives is brought into contact with the organic acid anhydride. The reaction proceeds from the surface of the aqueous solution and forms an insoluble membrane consisting of the acylated product on the surface of the aqueous solution. An aqueous solution still remains behind in membrane, in the interior of the material formed. As the reaction proceeds, the organic acid anhydride diffuses through the membrane into this solution to cause its gradual acylation and insolubilization.

On this occasion, there are cases where the chitin derivative having a faster velocity of acylation is preferentially insolubilized at the earlier stage, and the other chitin derivative having a slower velocity of acylation distributes itself homogenously within the interior of the thus-formed material.

The acylated product of chitin derivative is either an N-acylated chitosan, O-acylated chitin, N-, O-diacylated chitosan, or a mixture thereof. In addition, it is possible to leave structural-units of unreacted chitin derivatives by adjusting the degree to which the reaction proceeds.

The concentration of the mixture of chitin derivatives in aqueous solution affects the strength and the density of spherically shaped material that may be produced according to the invention. When the concentration is higher, spherically shaped material of a larger strength and which is denser is obtained. Such material acts as a molecular sieve over a broad range of molecular diameters. Usually the concentration is from 0.1 to 10% by weight. However, the concentration should be adequately adjusted according to the intended use and the desired properties of the material, and it is not necessarily restricted to this range.

The organic acid and the acid anhydride used as an acylating agent may be an aliphatic or aromatic organic acid with two to twenty carbon atoms and an anhydride thereof, respectively. For instance, acetic acid, propionic acid, butyric acid and valeric acid, and their anhydrides are suitable. These acids and acid anhydrides can be used respectively, singly or in a mixture of more than one of them. The organic acid anhydride and, if used, the organic acid, may be employed without dilution, or after addition of a solvent inert to the organic acid or its anhydride, for instance an organic solvent such as benzene, toluene, xylene or pyridine, or of a surfactant to adjust the rate of acylation and to make after-treatment of the acylated product easy.

Acylation is carried out at a temperature generally of 5 to 80°C, preferably 5 to 60°C. However, in the case where one or both of the chitin derivatives to be acylated has a degree of de-N-acetylation of over 0.6, a higher temperature is preferable. In the case where the mixture of chitin derivatives is reacted with a gaseous organic acid anhydride, the reaction temperature may be still higher.

The mode of adding the mixture of chitin derivatives which are to be acylated to the acylating agent can be suitably selected depending upon the desired use and form of the material that is to be produced. For instance, a liquid mixture prepared from two or more chitin derivatives can be dropped into an organic acid anhydride under agitation to form small dispersed particles.

The concentration of the mixture of chitin derivatives in aqueous solution, as stated before, may be from 0.1 to 10% by weight. When the viscosity of the solution is high, however, sometimes it is difficult to obtain a porous material with a small diameter. In such a case, a viscosity-reducing agent, such as ethylene glycol, glycerol, or alcohol, may be added to the aqueous solution.

The amount of organic acid anhydride used as the acylating agent is not particularly restricted. However, in general, it may be 1 to 100 times by equivalent, preferably 5 to 20 times by equivalent per equivalent of amino group of the de-N-acetylated product of the mixture of chitin derivatives.

In order to obtain a more porous material and to accelerate the acylation, the mixture of chitin derivatives preferably is prepared by adding 0.1 to 5 parts by weight of diluent, 0.001 to 1 part by weight of a porosity-regulating agent and 0.001 to 0.1 part by weight of a surfactant to the mixture per part by weight of the aqueous solution of the mixture of chitin derivatives. The order of addition and the techniques employed are not particularly restricted. In usual cases, diluent is first added to the aqueous solution of the mixture of chitin derivatives to obtain an homogeneous solution. The porosity-regulating agent containing the surfactant is then added to this solution. The thus obtained liquid mixture is usually in the state of emulsified dispersion. However, it may take the appearance of a homogeneous solution depending upon the proportional amount of the composition therein.

The diluent should be compatible with the aqueous solution of the mixture of chitin derivatives and the porosity-regulating agent. The diluent is used to adjust the viscosity of the liquid mixture and to assist the homogeneous dispersibility of the liquid mixture.

The diluent can be a $C_1$ to $C_4$ alcohol pyridine or a compound represented by the general formula $R—O—[(CH_2)_2O]_n R$; wherein R and R′ represent respectively either a hydrogen atom or a $C_1$ or $C_4$ alkyl group and *n* is an integer of 1 to 3. The diluent is typically exemplified by methanol, ethanol, n-propanol, iso-propanol, pyridine, ethylene glycol, ethylene glycol monomethyl ether, ethylene glycol monoethyl ether, ethylene glycol mono-n-butyl ether, ethylene glycol dimethyl ether, ethylene glycol diethyl ether, ethylene glycol di-n-butyl ether, diethylene glycol monomethyl ether, diethylene glycol monoethyl ether, diethylene glycol mono-n-butyl ether, diethylene glycol dimethyl ether, diethylene glycol diethyl ether and diethylene glycol di-n-butyl ether. Mixtures comprising two or more diluents can be employed.

The porosity-regulating agent is used to obtain a homogeneous acylation into within the acylated material that is produced according to the present invention and to make this acylated material strong and highly porous. For these purposes, the porosity-regulating agent should be insoluble in water, be inert to the acylating agent and be compatible with the acylating agent and the diluent. Suitable porosity-regulating agents include benzene and volatile alkylbenzenes such as toluene and xylene. The amount of porosity-regulating agent added may be determined depending upon the desired pore-size or pore-volume.

The surfactant for use in the invention is preferably non-ionic. It may be, for example, the monolaurate, monopalmitate, monostearate, monooleate or trioleate, of sorbitan or polyoxyethylene sorbitan. The surfactant is effective in dissolving or finely dispersing the diluent and porosity-regulating agent in the aqueous solution of the mixture of chitin derivatives. It is also effective in dispersing fibrous material formed by diluting the solution of the chitin derivatives with a large amount of the diluent. The presence of the surfactant is effective in carrying out the acylation homogeneously.

A porous and shaped material can also be prepared by forming a polyion complex of the mixture of chitin derivatives, dissolving this complex in an aqueous solution of salts and then acylating. In addition,

the apparatus for use in dispersing and shaping the material of acylated chitin derivatives of the present invention may be a stirrer provided with the usual stirring blades, a static mixer, a homogenizer or the like.

As has been described, in the above-mentioned mode, the reaction proceeds instantaneously from the surface of the droplets of the aqueous solution of chitin derivatives to form an insoluble membrane made of the acylated product of the mixture of chitin derivatives. Capsule-like, spherical products are produced. On continuation of the reaction, the acylating agent diffuses into within the droplet to form a gel optionally insolubilized. After carrying out the reaction for a predetermined period of time, gel-like porous spherical particles comprising acylated chitin derivatives are obtained by separating the particles and washing the particles to remove unreacted acylating agent from the particles. The spherical particles obtained may have a diameter ranging from $10^{-6}$ to $10^{-2}$ m (1 to 10,000 microns) according to the degree of dispersion, the viscosity of the liquid mixture, etc.

In order to change the compactness of the gel-like porous material of the invention, the concentration of the mixture of the chitin derivatives in aqueous solution, the temperature and the time period of the reaction, the amount of the diluent, etc. can be changed. The compactness of the material can be changed to be such that the threshold molecular weight of substances which may pass through the pores of the product is in the range of 500 to 400,000.

In another mode of operation, the dissolved mixture of chitin derivatives can be spun through nozzles into a liquid comprising the acylating agent. In this mode, fibers are obtained at least the surface layer of which is insolubilized. By washing the fibers, gel-like fibers comprising an acylated product are prepared. Alternatively, by using slits as nozzles, gel-like films comprising the acylated product according to the present invention can be obtained. In the case of both films and fibers, it is also possible to obtain hollow material, and to control the thickness and the compactness of the membrane according to necessity as in the case of spherical particles. Various other modes of adding an aqueous solution of the mixture of the chitin derivatives to an acylating solution can be employed.

The gel-like material of acylated chitin derivatives according to the present invention can have a broad water content ranging from 10 to 100 times the weight of the material in the dry state.

The gel-like material according to the present invention can be cross-linked according to necessity. Cross-linking can be carried out, for instance, by the following method:

First, the water content of the gel-like material of the invention is reduced to 2 to 3 times the weight of the material in the dry state by a treatment such as centrifugation, etc. Then the gel-like material is immersed in an aqueous alkali solution such as sodium hydroxide (concentration of greater than 40% by weight) in an amount of more than twice, preferably from 4 to 30 times, the weight of the material in dry state. Immersion is carried out at a temperature of lower than 15°C for 1 to 5 hours. After the immersion is over, excess alkali solution is removed while maintaining the state of immersion in an aqueous alkali solution in an amount of 3 to 6 times the weight of the material in dry state. Then the mixture is left at a temperature of 0 to 10°C for one to 24 hours to obtain a material pretreated by alkali. It is preferable to next freeze the material at a temperature of 0 to −30°C for one to 24 hours. Then, the pretreated material is dispersed in water or an organic solvent containing a cross-linking agent in an amount of 0.1 to 3 times, preferably 0.5 to 2 times, by mol per pyranose ring of the acylated product. Reaction is effected for 5 to 48 hours at a temperature of lower than 15°C. After the reaction is over, the reaction product is washed with water and is neutralized to obtain a water-insoluble and cross-linked material. Suitable cross-linking agents include epoxy compounds such as epichlorohydrin, epibromohydrin, 2,3-dibromopropanol and 2,3-dichloropropanol. The degree of cross-linking may be 0.01 to 0.3 per pyranose ring as determined by elementary analytical values.

As has been shown above, it is easily possible to prepare material in such shapes as spheres, fibers and films. As the shaped material of the invention is constituted of an acylated product of the mixture of chitin derivatives, which is porous, permeable, stable chemically and safe in living bodies, it is applicable to a broad range of uses.

Particularly, spherical material of the present invention is utilizable as an ion-exchanger by leaving some amino groups intact by controlling the amount of acylating agent employed or by reducing the reaction time in a 2-component system in which the velocities of acylation differ. Since the material is extremely stable and safe to living bodies, it is utilizable in this field, for instance, in blood perfusion, as an adsorbent which is orally administered to adsorb toxins within the gastro-intestinal tracts or as a coating material for adsorbents. In addition, when using the material in contact with blood, some amino groups of the material can be left free. Polyions may then be formed with an anti-thrombogenic substance such as heparin, chitosan sulfate, chitin sulfate. More preferably, the amino groups are sulfated. The material can also be employed as a filler for chromatographic columns and as a base material on which an enzyme, antigen or antibody is to be immobilised.

The following Examples illustrate the present invention:

Example 1

$5\times10^{-3}$ kg (5 g) of de-N-acetylated chitin with a degree of de-N-aceteylation of 0.95 and $10^{-3}$ kg (one gram) of de-N-acetylated carboxymethylchitin with a degree of carboxymethylation of 0.3 and a degree of de-N-acetylation of 0.6 were dissolved in $10^{-1}$ kg (100 g) of an aqueous 2% by weight solution of acetic acid.

A liquid mixture prepared by dissolving $10^{-3}$ kg (one gram) of polyoxyethylene sorbitan monooleate in $5\times10^{-2}$ kg (50 g) of ethanol was added to the resultant solution to form a homogeneous mixed solution A.

Next, $5\times10^{-2}$ kg (50 g) of acetic anhydride and $5\times10^{-3}$ kg (5 g) of polyoxyethylene sorbitan monooleate were dissolved in $2\times10^{-3}$ $m^3$ (2 litres) of toluene in a vessel provided with a bow-type stirrer. Solution A was added into this vessel under agitation at 1,000 rpm at room temperature for one hour to make a dispersion in which an acylation took place. After the reaction was over, $10^{-3}$ $m^3$ (one litre) of ethanol was added to the reaction mixture under agitation to obtain spherically shaped material. After separating the material by filtration and washing the separated material with ethanol, the washed material was dispersed in $10^{-3}$ $m^3$ (one litre) of distilled water and the pH of the aqueous dispersion was adjusted to 8.0. After collecting the thus treated material by filtration and washing off sodium acetate and sodium hydroxide which adhered to the material with distilled water, gel-like spherical particles according to the present invention were obtained having a diameter of $5\times10^{-5}$ to $1.5\times10^{-4}$ m (50 to 150 μm) (Specimen A.).

A comparative specimen (Specimen B) was formed by effecting the procedures above on a homogeneous mixed solution B obtained by dissolving $5\times10^{-3}$ kg (5 g) of the same de-N-acetylated chitin in the aqueous solution of acetic acid and adding the same amount of ethanol and polyoxyethylene oleate to prepare gel-like spherical particles having a diameter of $5\times10^{-5}$ to $1.5\times10^{-4}$ m (50 to 150 μm).

After drying, both Specimens A and B showed no infrared absorption bands at 1500 to 1530 $cm^{-1}$ due to an amino group or at 1700 to 1720 $cm^{-1}$ due to a carboxyl group. Their elementary analytical compositions of both specimens were as follows (% by weight):

| | C | H | O | N |
|---|---|---|---|---|
| Specimen A | 46.4 | 6.4 | 40.5 | 6.7 |
| Specimen B | 46.5 | 6.4 | 40.4 | 6.8 |

These values show fairly good coincidence with those of chitin.

Example 2

$5\times10^{-3}$ kg (5 g) of each of the gel-like materials obtained in Example 1 was dehydrated by centrifugation to a water-content of 2 kg/kg of dry matter. Each dehydrated material was immersed in 23 times its weight of an aqueous 43.5% by weight solution of sodium hydroxide at a temperature of 10°C for 3 hours. After compressing the immersed material to remove the aqueous solution of sodium hydroxide by centrifugation to a water content of 3 kg/kg of dry matter and leaving the material to stand for two hours at 0°C, it was frozen for one hour at −20°C. Then, a solution of epichlorhydrin in an amount of 2 molar times the amount of the above-mentioned gel-like product in dry state in 50 times the weight of the gel-like product in dry state of isopropyl alcohol was introduced into a flask provided with a stirrer and kept at a temperature of 0 to 5°C. The frozen gel-like product was added to the solution. Reaction was effected for 5 hours.

The reaction was continued for a further 5 hours at 15°C. After the reaction was over, the reaction mixture was filtered to obtain a solid material which was washed with ethanol. The washed material then was dispersed in distilled water, and was neutralized with an aqueous 1N solution of hydrochloric acid while cooling from outside. The thus obtained solid material was separated by filtration and washed with water to obtain spherical cross-linked material.

Each of the cross-linked shaped materials was used to fill a column 2 cm in inner diameter to a height corresponding to a volume of 150 ml. These columns were employed to test the separating ability to each of the specimens by the following procedures:

$2\times10^{-5}$ kg (20 mg) of each of blue-dextran of molecular weight of $2\times10^6$, of dextran (i) of molecular weight of $2.5\times10^5$, of dextran (ii) of molecular weight of $1\times10^5$ and of dextran (iii) of molecular weight of $1\times10^4$ were dissolved in $2\times10^{-6}$ $m^3$ (2 ml) of distilled water. This solution was developed on the above-mentioned column. Distilled water was poured onto the column at a rate of $1.66\times10^{-8}$ $m^3/s$ (1 ml/min). The eluants were analyzed by a total carbon analyzer and an infrared analyzer. The elution-pattern is shown in Table 1. This shows that the cross-linked shaped material according to the present invention exhibited an excellent separating ability and a high molecular sieve effectiveness.

TABLE 1
Elution pattern

| Solute | Amount of eluant (ml) ($10^{-6}m^3$) | |
|---|---|---|
| | Specimen A (present invention) | Specimen B (comparative) |
| Blue-dextran | 55—65 | 55—65 |
| Dextran (i) | 80—90 | 70—80 |
| Dextran (ii) | 105—115 | 80—90 |
| Dextran (iii) | 125—135 | 90—100 |

Example 3

$2.5\times10^{-3}$ kg (2.5 g) of de-N-acetylated dihydroxypropylchitin with a degree of 2,3-dihydroxypropylation of 0.3 and a degree of de-N-acetylation of 0.9 and $2.5\times10^{-3}$ kg (2.5 g) of de-N-acetylated chitin with a degree of de-N-acetylation of 0.9 were dissolved in $10^{-1}$ kg (100 g) of an aqueous 2% by weight solution of acetic acid. A liquid mixture prepared by dissolving $10^{-3}$ kg (one gram) of polyoxyethylene sorbitan monooleate in $10^{-1}$ kg (100 g) of propanol was added to the above-mentioned solution to prepare a homogeneously mixed solution C.

Next $5\times10^{-2}$ kg (50 g) of propionic anhydride and $5\times10^{-3}$ kg (5 g) of polyoxyethylene sorbitan monooleate were dissolved in $2\times10^{-3}$ $m^3$ (2 litres) of xylene in the same vessel as in Example 1. Solution C was added to the vessel under agitation at 1,000 rpm at room temperature for one hour to make a dispersion in which acylation took place. Then, according to the same procedures as in Example 1, spherical gel-like material according to the present invention was obtained (Specimen C).

As comparative specimens, other spherical gel-like materials were obtained using either the de-N-acetylated chitin or the de-N-acetylated dihydroxypropylchitin only as the starting material by the same procedures as in Example 1. These comparative specimens were called Specimen D (using dihydroxypropylchitin) and Specimen E (using chitin).

Specimens C, D and E were found to contain $10^{-2}$ kg (10 g) of water per $10^{-3}$ kg (gram) of dry matter. The results of infrared analysis and elementary analysis carried on these specimens revealed that they were N-propionylchitosan.

Example 4

The separating ability of specimens C, D and E obtained in Example 3 was determined by the same procedure in Example 2. The results are shown in Table 2. As is seen in Table 2, Specimen C according to the present invention showed a higher separating ability than the Comparative Specimens D and E.

TABLE 2
Elution pattern

| Solute | Amount of eluant (ml) ($10^{-6}$ $m^3$) | | |
|---|---|---|---|
| | Specimen C (present invention) | Specimen D (comparative) | Specimen E (comparative) |
| Blue-dextran | 55—65 | 55—65 | 55—65 |
| Dextran (i) | 75—85 | 70—80 | 70—80 |
| Dextran (ii) | 100—110 | 80—90 | 80—90 |
| Dextran (iii) | 120—130 | 90—100 | 90—100 |

Example 5

$5\times10^{-3}$ kg (5 g) of de-N-acetylated hydroxyethylchitin with a degree of hydroxyethylation of 1.0 and a degree of degree of de-N-acetylation of 0.6 were dissolved in $2\times10^{-1}$ kg (200 g) of an aqueous 2% by weight solution of acetic acid. This solution was slowly added under agitation to a liquid mixture prepared by dissolving $5\times10^{-3}$ kg (5 g) of de-N-acetylated carboxymethylchitin with a degree of carboxymethylation of 0.6 and a degree of de-N-acetylation of 0.3 in $2\times10^{-1}$ kg (200 g) of an aqueous 2% by weight solution of sodium hydroxide. After the addition, agitation was continued for one hour to form a white polyion

complex. The yield of the polyion complex, after separation by filtration, washing with water and drying, was $9\times10^{-3}$ kg (9 g).

Next, after dissolving $5\times10^{-3}$ kg (5 g) of the polyion complex in $10^{-1}$ kg (100 g) of an aqueous 10% by weight solution of sodium acetate, a liquid mixture prepared by dissolving $2\times10^{-3}$ kg (2 g) of polyoxyethylene sorbitan monooleate in $3\times10^{-2}$ kg (300 g) of ethanol was added to the solution of the polyion complex to prepare a homogeneous mixed solution. This solution was acylated by the same procedures as in Example 1 to obtain gel-like spherical material according to the present invention.

After drying, the thus obtained material showed no infrared absorption bands at 1500 to 1530 $cm^{-1}$ due to an amino group or at 1700 to 1720 $cm^{-1}$ due to a carboxyl group. The elementary analytical data show fairly good coincidence with those of chitin.

The gel-like material was subjected to cross-linking by the same method as in Example 2. The separating ability of the cross-linked product was as in Example 2 except that $2\times10^{-2}$ kg (20 g) of dextran (iv) of molecular weight of $5\times10^5$ was added as a solute to solutes (i) to (iii). The elution pattern is shown in Table 3. As is seen in Table 3, the cross-linked shaped material according to the present invention showed a high molecular sieve effectiveness and an excellent separating ability.

TABLE 3
Elution pattern

| Solute | Amount of eluant (ml) ($10^{-6}$ $m^3$) |
|---|---|
| Blue-dextran | 55—65 |
| Dextran (i) | 65—75 |
| Dextran (ii) | 85—95 |
| Dextran (iii) | 110—120 |
| Dextran (iv) | 130—140 |

Example 6

Solution A prepared in Example 1 was subjected to de-airing to become a starting material for spinning.

Fibres of an acylated product of a mixture of chitin derivatives were obtained by spinning the starting material using a spinning apparatus which was provided with a tank for the starting material, a reacting vessel $5\times10^{-2}$ m (50 mm) in diameter and 5 m (5,000 mm) in length provided with 50 nozzle-holes of $10^{-4}$ m (0.1 mm) in diameter, a roller, a solvent-removing vessel containing a mixture of ethanol and water, an another solvent-removing vessel containing hot water at a temperature of 100°C and a take-up winder. The composition of the solution introduced into the reacting vessel kept at a temperature of 50°C was as follows:

toluene:acetic anhydride:polyoxyethylene monooleate=10:5:1 (by weight). The spinning was carried out at an output pressure of $9.81\times10^4$ Pa (1 kg/$cm^2$).

The fibrous material obtained had a diameter of $1.5\times10^{-5}$ m (15 microns) and a tensile strength of $4.21\times10^4$ kPa (430 kg-force/$cm^2$) in the dry state.

The spinning procedures were carried also on solution B of Example 1 to obtain fibres. When the fibrous material was immersed in an aqueous 5% by weight solution of acetic acid, however, a part of the material dissolved. After drying the fibres showed a tensile strength of $9.81\times10^3$ kPa (100 kg-force/$cm^2$). It is considered that acylation was insufficient so as to leave unreacted substances in this material.

Example 7

$10^{-3}$ kg (1 g) of de-N-acetylated carboxymethylchitin with a degree of carboxymethylation of 0.5 and a degree of de-N-acetylation of 0.5 and $4\times10^{-3}$ kg (4 g) of de-N-acetylated methylchitin with a degree of methylation of 0.5 and a degree of de-N-acylation of 0.9 were dissolved in $10^{-1}$ kg (100 g) of an aqueous 2% by weight solution of acetic acid. A liquid mixture prepared by dissolving $10^{-3}$ kg (1 g) of polyoxyethylene sorbitan monooleate in $5\times10^{-2}$ kg (50 g) of methanol was added to the solution under agitation to prepare a homogeneous mixed solution G.

Next $2.5\times10^{-2}$ kg (25 g) of acetic anhydride and $5\times10^{-3}$ kg (5 g) of polyoxyethylene sorbitan monooleate were dissolved in $2\times10^{-3}$ $m^3$ (2 litres) of toluene in a first vessel as in Example 1. $2.5\times10^{-2}$ kg (25 g) of lauric anhydride and $5\times10^{-3}$ kg (5 g) of polyoxyethylene sorbitan monooleate were dissolved in $2\times10^{-3}$ $m^3$ (2 litres) of benzene in a second vessel. Solution G was added to the first vessel under agitation at 1,000 rpm for 10 min at room temperature to carry out acylation. Spherically shaped material (Specimen

G) was obtained by filtering the reaction mixture of the first vessel. Specimen G was then added to the second vessel under agitation at 1,000 rpm at room temperature for one hour to carry out another acylation. The same procedures as in Example 1 were taken to obtain spherically shaped gel-like material (Specimen H).

Furthermore, a liquid mixture prepared by dissolving $2.5\times10^{-2}$ kg (25 g) of acetic anhydride, $2.5\times10^{-2}$ kg (25 g) of lauric anhydride and $5\times10^{-3}$ kg (5 g) of polyoxyethylene sorbitan monooleate in $2\times10^{-3}$ $m^3$ (2 litres) of toluene was added to solution G to carry out acylation as in Example 1. After acylation, spherically shaped gel-like material was obtained (Specimen I).

The dried specimen G showed no infrared absorption band at 1700 to 1720 $cm^{-1}$ due to a carboxyl group. However, an infrared absorption band at 1500 to 1530 $cm^{-1}$ due to an amino group was observed. On the other hand, both of the dried specimens H and I showed no infrared absorption bands at 1500 to 1530 $cm^{-1}$ or at 1700 to 1720 $cm^{-1}$.

Specimens H and I, and Specimen A obtained in Example 1 were sifted to obtain particles of a size of $5\times10^{-5}$ to $1.5\times10^{-4}$ m (50 to 150 μm) in diameter, and then they were respectively treated with chitinase as follows:

A specimen was added to an aqueous acetic acid buffer solution of pH 6.0. After leaving for one hour, chitinase was added to the buffer solution and the mixture was shaken for 72 hours at room temperature. As a result of this treatment, Specimens A and I became brittle and smaller in size than the initial state with pulverization. However, Specimen H showed scarcely any change in particle diameter or strength.

In addition, the weight of the specimens was examined before and after the chitinase treatment. All the specimens removed the smaller particles of less than 50 μm in diameter by water-sifting showed a decrease of its weight, the percentage of decrease was 25% in A, 20% in I and 4% in H. The clear difference between the specimens is considered to be due to the difference in the decomposition caused by the chitinase corresponding to the difference in the chemical structures of the specimens. It is still considered that, in Specimen H, the chitin derivatives with different velocities of acylation are arranged homogeneously.

The ability of Specimen I to separate substances was tested as in Examples 2 and 5 before and after the treatment with chitinase. The results are shown in Table 4. As is seen in Table 4, the separating ability of the specimen treated with chitinase became larger.

TABLE 4
Change of elution pattern

| Solute | Amount of eluant (ml) ($10^{-6}$ $m^3$) | |
|---|---|---|
| | Before treatment | After treatment |
| Blue dextran | 55—65 | 60—70 |
| Dextran (i) | 60—70 | 70—80 |
| Dextran (ii) | 80—90 | 90—100 |
| Dextran (iii) | 105—115 | 110—120 |
| Dextran (iv) | 125—135 | 135—145 |

Example 8

$2.5\times10^{-3}$ kg (2.5 g) of de-acetylated chitin with a degree of de-N-acetylation of 0.9 and $2.5\times10^{-3}$ kg (2.5 g) of de-N-acetylated ethylchitin with a degree of ethylation of 0.7 and a degree of de-N-acetylation of 0.9 were dissolved in $10^{-1}$ kg (100 g) of an aqueous 2% by weight solution of acetic acid. A liquid mixture prepared by dissolving $10^{-3}$ kg (one gram) of polyoxyethylene sorbitan monooleate and $5\times10^{-3}$ kg (5 g) of toluene in $5\times10^{-2}$ kg (50 g) of ethanol was added to the resulting solution to form a mixed solution J.

On the other hand, $2\times10^{-3}$ kg (2 g) of de-acetylated chitin as above, $2\times10^{-3}$ kg (2 g) of de-acetylated ethylchitin as above and $10^{-3}$ kg (one gram) of de-N-acetylated carboxymethylchitin with a degree of carboxymethylation of 0.5 and a degree of de-N-acetylation of 0.8 were dissolved in another $10^{-1}$ kg (100 g) of an aqueous 2% by weight solution of acetic acid. Then, $10^{-3}$ kg (one gram) of polyoxyethylene sorbitan monooleate dissolved in $5\times10^{-2}$ kg (50 g) of ethanol were added to the solution to form a mixed solution K. Solutions J and K were respectively acylated as in Example 1 to obtain respective spherically shaped gel-like materials (Specimens J and K). The separating ability of Specimens J and K was tested using the same procedures as in Example 2 and 5. The results are shown in Table 5.

TABLE 5
Elution pattern

| Solute | Amount of eluant (ml) ($10^{-6}$ $m^3$) | |
|---|---|---|
| | Specimen J | Specimen K |
| Blue dextran | 55—65 | 55—65 |
| Dextran (i) | 65—75 | 60—70 |
| Dextran (ii) | 90—100 | 80—90 |
| Dextran (iii) | 110—120 | 105—115 |
| Dextran (iv) | 130—140 | 125—130 |

As is seen in Table 5, the spherically shaped gel-like material according to the present invention showed a high molecular sieve effectiveness and an excellent separating ability.

Example 9

$4\times10^{-3}$ kg (4 g) of de-N-acetylated carboxymethylchitin with a degree of carboxymethylation of 0.5 and a degree of de-N-acetylation of 0.5 and $10^{-3}$ kg (1 g) of de-N-acetylated hydroxyethylchitin with a degree of hydroxyethylation of 0.5 and a de-N-acetylation of 0.8 were dissolved in $10^{-1}$ kg (100 g) of an aqueous 1% by weight solution hydrochloric acid. Then, $2\times10^{-2}$ kg (20 g) of ethanol was added to this solution to prepare a homogeneous solution K.

Next, $2\times10^{-2}$ kg (20 g) of capric anhydride and $5\times10^{-3}$ kg (5 g) of polyoxyethylenesorbitan monooleate were dissolved in $2\times10^{-3}$ $m^3$ (2 litres) of toluene in the same vessel as in Example 1. Solution K was added to the vessel under agitation of 1,000 rpm for 15 min at room temperature to carry out acylation. A white spherically shaped material was thus formed. $10^{-2}$ kg (10 g) of propionic anhydride was added to the solution containing this to carry out further acylation. The thus-obtained mixture was treated by the same procedures as in Example 1 to obtain spherically shaped gel-like material.

## Claims

1. A process for the preparation of a product having at least its surface layer composed of an acylated mixture of two or more chitin derivatives, which process comprises

(i) mixing together two or more of the following six materials: (a) a de-N-acetylated chitin, (b) a de-N-acetylated carboxyalkyl chitin, (c) a de-N-acetylated hydroxyethyl chitin, (d) a de-N-acetylated hydroxypropyl chitin, (e) a de-N-acetylated dihydroxypropyl chitin and (f) a de-N-acetylated alkyl chitin, said materials being represented by the formula (1):

$$[C_6H_8O_3 \cdot (NH_2)_x \cdot (NHCOCH_3)_y \cdot (OR)_a \cdot (OH)_b]_n \qquad (1)$$

wherein R represents a carboxyalkyl group of from two to four carbon atoms, a hydroxyethyl group, a hydroxypropyl group, a dihydroxypropyl group or an alkyl group of from one to three carbon atoms, $x$ is a number of 0.1 to 1.0, $y=1.0-x$, $a$ is a number of 0 to 1.0, and $b=1.0-a$, or being salts of said compounds of formula (1); and

(ii) acylating the mixture of materials such that the desired product having at least its surface layer composed of the acylated mixture is obtained.

2. A process according to claim 1, wherein in the formula (1) $x$ is from 0.2 to 0.6 when R represents a carboxyalkyl group of from two to four carbon atoms, a hydroxyethyl group, a hydroxypropyl group or a dihydroxypropyl group; and $x$ is from 0.5 to 0.9 when R represents an alkyl group of from one to three carbon atoms or when $a$ is 0.

3. A process according to claim 1 or 2 wherein $a$ in the formula (1) is from 0.3 to 1.0 for a chitin derivative which is de-N-acetylated and etherified.

4. A process according to any one of the preceding claims, wherein (A) a de-N-acetylated chitin (a) and/or a de-N-acetylated alkyl chitin (f) of formula (1) and (B) at least one of a de-N-acetylated carboxyalkyl chitin (b), a de-N-acetylated hydroxyethyl chitin (c), a de-N-acetylated hydroxypropyl chitin (d) and a de-N-acetylated dihydroxypropyl chitin (e) of formula (1) are mixed together in step (i).

5. A process according to claim 4, wherein derivatives (A) and (B) are mixed in proportions of from 0.05 to 50 parts by weight of (B) per part by weight of (A).

6. A process according to any one of the preceding claims, further comprising (iii) cross-linking the acylated mixture.

7. A process according to any one of the preceding claims wherein the product that is prepared is in the form of spheres, fibers or a film.

8. A process according to any one of the preceding claims, wherein the product that is prepared comprises two or more layers, each layer comprising an acylated mixture of chitin derivatives of formula (1) and the acylated mixture of one layer being different from the acylated mixture of an adjacent layer.

9. A process according to any one of the preceding claims, wherein step (ii) is conducted by contacting the mixture of materials with a first acylating agent to at least partially acylate the chitin derivative which has the faster acylation reaction velocity, and contacting the thus produced material with another acylating agent to at least partially acylate the chitin derivative(s) having the slower acylation reaction velocity.

10. An immobilised enzyme, antibody or antigen, said enzyme, antibody or antigen being immobilised on a product prepared by a process as claimed in any one of the preceding claims.

11. A polyion composed of an antithrombogenic substance and a product prepared by a process as claimed in any one of claims 1 to 9.

**Patentansprüche**

1. Verfahren zur Herstellung eines Produkts, bei dem zumindest die Oberflächenschicht aus einem acylierten Gemisch von zwei oder mehr Chitinderivaten besteht, wobei in dem Verfahren

(i) zwei oder mehr der folgenden sechs Materialien vermischt werden: (a) ein de-N-acetyliertes Chitin, (b) ein de-N-acetyliertes Carboxyalkylchitin, (c) ein de-N-acetyliertes Hydroxyethylchitin, (d) ein de-N-acetyliertes Hydroxypropylchitin, (e) ein de-N-acetyliertes Dihydroxypropylchitin und (f) ein de-N-acetyliertes Alkylchitin, wobei die Materialien durch die allgemeine Formel (1)

$$[C_6H_8O_3 \cdot (NH_2)_x \cdot (NHCOCH_3)_y \cdot (OR)_a \cdot (OH)_b]_n \qquad (1)$$

dargestellt werden, worin R einen Carboxyalkyl-rest mit 2 bis 4 Kohlenstoffatomen, einen Hydroxyethylrest, einen Hydroxypropylrest, einen Dihydroxypropylrest oder einen Alkylrest mit 1 bis 3 Kohlenstoffatomen darstellt, x eine Zahl von 0,1 bis 1,0 bedeutet, $y=1,0-x$, gilt, a eine Zahl von 0 bis 1,0 ist und $b=1,0-a$ gilt, oder Salze der Verbindungen nach Formel (1) sind, und

(ii) das Gemisch der Materialien so acyliert wird, daß das gewünschte Produkt, bei dem zumindest die Oberflächenschicht aus dem acylierten Gemisch besteht, erhalten wird.

2. Verfahren nach Anspruch 1, worin in der Formel (1) x gleich 0,2 bis 0,6 ist, wenn R einen Carboxyalkylrest mit 2 bis 4 Kohlenstoffatomen, einen Hydroxyethylrest, einen Hydroxypropylrest oder einen Dihydroxypropylrest darstellt, und x einen Wert von 0,5 bis 0,9 bedeutet, wenn R einen Alkylrest mit 1 bis 3 Kohlenstoffatomen bedeutet oder wenn a gleich 0 ist.

3. Verfahren nach Anspruch 1 oder 2, worin a in der Formel (1) für einen Wert von 0,3 bis 1,0 für ein Chitinderivat steht, welches de-N-acetyliert und verethert ist.

4. Verfahren nach einem der voranstehenden Ansprüche, worin (A) ein de-N-acetyliertes Chitin (a) und/oder ein de-N-acetyliertes Alkylchitin (f) der Formel (1) und (B) mindestens eine der Verbindungen aus der Gruppe von einem de-N-acetylierten Carboxyalkylchitin (b), einen de-N-acetylierten Hydroxyethylchitin (c), einem de-N-acetylierten Hydroxypropylchitin (d) und einem de-N-acetylierten Dihydroxypropylchitin (e) der Formel (1) in Schritt (i) vermischt werden.

5. Verfahren nach Anspruch 4, worin die Derivate (A) und (B) in Verhältnissen von 0,05 bis 50 Gewichtsteilen von (B) pro Gewichtsteil von (A) vermischt werden.

6. Verfahren nach einem der voranstehenden Ansprüche, worin ferner (iii) das acylierte Gemisch vernetzt wird.

7. Verfahren nach einem der voranstehenden Ansprüche, worin das Produkt in der Form von Kugeln, Fasern oder einen Film hergestellt wird.

8. Verfahren nach einem der voranstehenden Ansprüche, worin das hergestellte Produkt zwei oder mehrere Schichten umfaßt, wobei jede Schicht ein acyliertes Gemisch von Chitinderivaten nach Formel (1) enthält und das acylierte Gemisch einer Schicht von dem acylierten Gemisch einer angrenzenden Schicht unterschiedlich ist.

9. Verfahren nach einem der voranstehenden Ansprüche, worin Stufe (ii) durchgeführt wird, indem das Gemisch der Materialien zunächst mit einem ersten Acylierungsmittel in Berührung gebracht wird, um mindestens teilweise das Chitinderivat zu acylieren, welches die schnellere Acylierungsreaktions-Geschwindigkeit aufweist, und das so hergestellte Material mit einem anderen Acylierungsmittel in Berührung gebracht wird, um mindestens teilweise das Chitinderivat(e) mit der geringeren Acylierungsreaktions-Geschwindigkeit zu acylieren.

10. Immobilisiertes Enzym, Antikörper oder Antigen, wobei das Enzym, der Antikörper oder das Antigen auf einem Produkt immobilisiert sind, welches nach einem Verfahren gemäß einem der voranstehenden Ansprüche hergestellt worden ist.

11. Polyion, zusammengesetzt aus einer antithrombogenen Substanz und einem Produkt, welches nach einem der Verfahren gemäß einem der Ansprüche 1 bis 9 hergestellt worden ist.

**Revendications**

1. Procédé de préparation d'un produit ayant au moins sa couche superficielle composée d'un mélange acylé de deux ou plusieurs dérivés de la chitine, lequel procédé comprend

(i) le mélange de deux ou de plusieurs des six matériaux suivants: (a) une chitine dé-N-acétylée, (b) une carboxyalcoylchitine dé-N-acétylée, (c) une hydroxyéthylchitine dé-N-acétylée, (d) une hydroxypropylchitine dé-N-acétylée, (e) une dihydroxypropylchitine dé-N-acétylée et (f) une alcoylchitine dé-N-acétylée, lesdits matériaux étant représentés par la formule (1):

$$[C_6H_8O_3 \cdot (NH_2)_x \cdot (NHCOCH_3)_y \cdot (OR)_a \cdot (OH)_b]_n \quad (1)$$

dans laquelle R représente un groupe carboxyalcoyle de deux à quatre atomes de carbone, un groupe hydroxyéthyle, un groupe hydroxypropyle, un groupe dihydroxypropyle ou un groupe alcoyle d'un à trois atomes de carbone, $x$ est un nombre de 0,1 à 1,0, $y=1{,}0-x$, $a$ est un nombre de 0 à 1,0, et $b=1{,}0-a$, ou étant des sels desdits composés de formule (1); et

(ii) l'acylation du mélange de matériaux de manière à obtenir le produit désiré ayant au moins sa couche superficielle composée du mélange acylé.

2. Procédé selon la revendication 1, dans lequel dans la formule (1) $x$ va de 0,2 à 0,6 lorsque R représente un groupe carboxyalcoyle de deux à quatre atomes de carbone, un groupe hydroxyéthyle, un groupe hydroxypropyle ou un groupe dihydroxypropyle; et $x$ va de 0,5 à 0,9 lorsque R représente un groupe alcoyle de un à trois atomes de carbone ou lorsque $a$ est 0.

3. Procédé selon la revendication 1 ou 2 dans lequel $a$ dans la formule (1) va de 0,3 à 1,0 pour un dérivé de la chitine qui est dé-N-acétylé et éthérifié.

4. Procédé selon l'une quelconque des revendications précédentes, dans lequel (A) une chitine dé-N-acétylée (a) et/ou une alcoylchitine dé-N-acétylée (f) de formule (1) et (B) au moins une parmi une carboxyalcoylchitine dé-N-acétylée (b), une hydroxyéthylchitine dé-N-acétylée (c), une hydroxypropylchitine dé-N-acétylée (d) et une dihydroxypropylchitine dé-N-acétylée (e) de formule (1) sont mélangées ensemble dans l'étape (i).

5. Procédé selon la revendication 4, dans lequel les dérivés (A) et (B) sont mélangés dans des proportions de 0,05 à 50 parties en poids de (B) par partie en poids de (A).

6. Procédé selon l'une quelconque des revendications précédentes, comprenant de plus (iii) la réticulation du mélange acylé.

7. Procédé selon l'une quelconque des revendications précédentes, dans lequel le produit qui est préparé est sous la forme de sphères, de fibres ou d'une pellicule.

8. Procédé selon l'une quelconque des revendications précédentes, dans lequel le produit qui est préparé comprend deux ou plusieurs couches, chaque couche comprenant un mélange acylé de dérivés de la chitine de formule (1) et le mélange acylé d'une couche étant différent du mélange acylé d'une couche adjacente.

9. Procédé selon l'une quelconque des revendications précédentes, dans lequel l'étape (ii) est effectuée en mettent en contact le mélange de matériaux avec un premier agent d'acylation pour acyler au moins partiellement le dérivé de la chitine qui a la vitesse de réaction d'acylation la plus grande, et en mettant en contact le matériau ainsi produit avec un autre agent d'acylation pour acyler au moins partiellement le(s) dérivé(s) de la chitine ayant la vitesse de réaction d'acylation la plus faible.

10. Enzyme, anticorps ou antigène immobilisé(e), ladite enzyme, ledit anticorps ou antigène étant immobilisé(e) sur un produit préparé par un procédé tel que revendiqué dans l'une quelconque des revendications précédentes.

11. Polyion composé d'une substance antithrombogène et d'un produit préparé par, un procédé comme revendiqué dans l'une quelconque des revendications 1 à 9.